Europäisches Patentamt

European Patent Office

Office européen des brevets

(11) Veröffentlichungsnummer : **0 214 165 B1**

# EUROPÄISCHE PATENTSCHRIFT

(45) Veröffentlichungstag der Patentschrift :
17.08.88

(21) Anmeldenummer : 86901045.4

(22) Anmeldetag : 08.02.86

(86) Internationale Anmeldenummer :
PCT/DE 86/00045

(87) Internationale Veröffentlichungsnummer :
WO/8605258 (12.09.86 Gazette 86/20)

(51) Int. Cl.⁴ : **F 23 D 14/22**

(54) **Kammer für explosive Werkstückbearbeitung, insbesondere für thermische Entgratanlagen.**

(30) Priorität : 05.03.85 DE 3507669

(43) Veröffentlichungstag der Anmeldung :
18.03.87 Patentblatt 87/12

(45) Bekanntmachung des Hinweises auf die Patenterteilung : 17.08.88 Patentblatt 88/33

(84) Benannte Vertragsstaaten :
AT CH DE FR GB IT LI

(56) Entgegenhaltungen :
WO-A-84 /042 66
DE-A- 2 122 221
FR-A- 2 385 984
GB-A- 1 372 184

(73) Patentinhaber : ROBERT BOSCH GMBH
Postfach 50
D-7000 Stuttgart 1 (DE)

(72) Erfinder : CONRAD, Hans-Jürgen
Lessingstr. 25
D-7255 Rutesheim (DE)

## Beschreibung

Stand der Technik

Die Erfindung geht aus von einer Bearbeitungskammer, insbesondere für thermische Entgratanlagen nach der Gattung des Patentanspruchs 1. Bei den besonders in Bezug genommenen bekannten Anlagen zum thermischen Entgraten findet unter dem Einfluß von Wärme ein chemischer Prozeß statt. Der abzutragende Werkstoff wird mit Sauerstoff oxydiert und verbrannt. Der zum Entgraten notwendige Hitzeschock wird durch Abbrennen eines Brenngas-Sauerstoffgemisches erzeugt, wobei z. B. Wasserstoff oder Erdgas bzw. Methan als Brenngas verwendet werden können. Damit die notwendige Energie freigesetzt wird, muß das Gasgemisch vor dem Zünden komprimiert werden. Dies geschieht in der Regel mit Hilfe von Dosierzylindern und Gaseinstoßkolben. Die Vermischung der Gaskomponenten und Zündung des Gasgemisches erfolgt in einem Mischblock, der einen Mischraum sowie eine Zündvorrichtung zum Zünden des Gasgemisches enthält.

Die ordnungsgemäße Zündung und schnelle Verbrennung des Gasgemisches hängt u. a. entscheidend von einer guten, gleichmäßigen Durchmischung des Gaskomponenten im Bereich der Zündstelle und des Brennraums der Werkstück-Bearbeitungskammer ab. Durch die DE-A-30 13 393, die ebenfalls eine Kammer für explosive Werkstückbearbeitung beschreibt, ist es bekannt, die Gemischaufbereitung dadurch zu verbessern, daß die Zuleitungen für die Gaskomponeten tangential in den als Bohrung ausgebildeten Mischraum der Mischkammer einmünden. Hierdurch entsteht eine starke Drallströmung und somit eine intensive Vermischung der Gaskomponenten. Ein solcher, separater Mischblock ist jedoch aufgrund der für die tangentiale Einleitung der Gaskomponenten erforderlichen Geometrie der Zuleitungen und des Mischraums verhältnismäßig voluminös und dementsprechend teuer.

Durch die DE-A-21 22 221 ist es bekannt, den Brennraum einer Werkstück-Bearbeitungskammer gleichzeitig als Mischraum für die Gaskomponenten zu verwenden, jedoch münden dort die als parallele Bohrungen im Kopfteil der Bearbeitungskammer ausgebildeten Zuleitungen für die Gaskomponenten unmittelbar in den Brennraum, was zur Folge hat, daß die Gase nur unzureichend miteinander vermischt werden.

Die FR-A-2 385 984 beschreibt einen Gasbrenner mit einer in eine Brennkammer mündenden Düsenanordnung zur kontinuierlichen Verbrennung eines aus einem Brenngas, Wasserdampf und Luft bestehenden Gasgemisches. Diese Düsenanordnung zwingt den Gasströmen bei ihrem Eintritt in die Brennkammer eine deren Durchmischung fördernde Form und Richtung auf, indem der Wasserdampf durch schräg zur Hauptströmungsrichtung der Gase verlaufende Düsenbohrungen in den Brennraum eintritt, während das Brenngas durch einen Ring mit zur Längsachse des Gaszuführrohrs geneigter Ringfläche in Richtung der aus den Düsenbohrungen austretenden Wasserdampfstrahlen umgelenkt wird. Die Verbrennung des Gasgemisches erfolgt bei annähernd atmosphärischem Druck und relativ niedrigen Temperaturen ausschließlich in der offenen Brennkammer, so daß die bekannte Düsenanordnung keinem nennenswerten Verschleiß durch Korrosion sowie Druck- und Hitzebelastungen ausgesetzt ist.

Vorteile der Erfindung

Die erfindungsgemäße Bearbeitungskammer mit den kennzeichnenden Merkmalen des Anspruchs 1 hat demgegenüber den Vorteil, daß durch die Düsengeometrie eine innige und gleichmäßige Vermischung der Gaskomponenten gewährleistet ist, wobei der den Hauptbestandteil der Düsenanordnung bildende Rundbolzen ein verhältnismäßig kleines, einfach herstellbares Bauelement darstellt, dessen Austausch als hoch beanspruchtes Verschleißteil mit geringen Kosten möglich ist. Der starke Verschleiß entsteht dadurch, daß bei der Verbrennung des Gasgemisches in der geschlossenen Bearbeitungskammer kurzzeitig sehr hohe Temperaturen und Drücke auftreten, wobei die Druck- und Flammfront insbesondere auch die Düsenordnung erfaßt, in deren Hohlräumen sich gleichfalls zündfähiges Gemisch befindet. Diese Druck- und Temperaturbelastungen in Verbindung mit der korrodierenden Wirkung des Brenngas Sauerstoffgemisches haben zur Folge, daß die Düsenanordnung in relativ kurzen Zeitabständen erneuert werden muß, was durch Nachbearbeitung der den Ringspalt begrenzenden Wand des Brennraums und Austausch des darin eingesetzten Rundbolzens problemlos möglich ist.

Das dem Mischraum zugekehrte Ende des Bolzens hat zweckmäßigerweise einen Überstand gegenüber der die Bohrung für den Bolzen aufweisenden Wandfläche des Mischraums, wobei im Bereich dieses Überstandes die Mehrlochdüse im bzw. am Bolzen angebracht ist. Dadurch entfallen zusätzliche Bauteile für die Herstellung der Mehrlochdüse.

Zeichnung

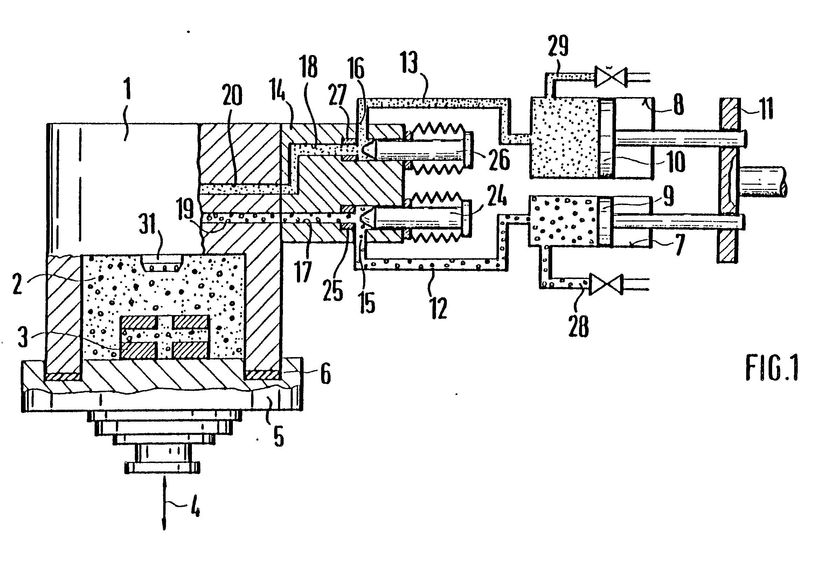

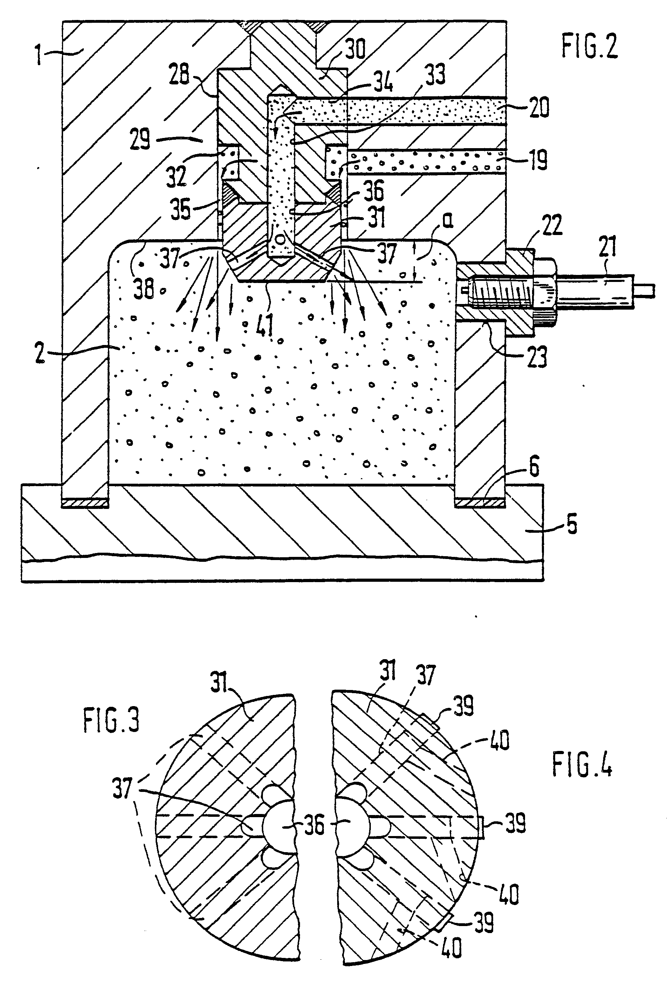

Zwei Ausführungsbeispiele der Erfindung sind in der Zeichnung dargestellt und in der nachfolgenden Beschreibung mit Angabe weiterer Vorteile näher erläutert. Es zeigen Figur 1 den schematischen Aufbau einer Anlage zum thermischen Entgraten von Werkstücken, Figur 2 einen Längsschnitt durch die Werkstück-Bearbeitungskammer der Anlage nach Figur 1, Figur 3 einen Querschnitt durch einen Teil eines in der Werkstück-Bearbeitungskammer angeordneten Bolzens im Bereich einer in ihm ausgebildeten Mehrlochdüse, Figur 4 einen Querschnitt durch einen Bolzen mit einer von Figur 3 unterschiedlichen Ausgestaltung einer Mehrlochdüse.

## Beschreibung der Ausführungsbeispiele

In Figur 1 ist mit 1 eine Bearbeitungskammer bezeichnet, in deren Brennraum 2 sich ein zu entgratendes Werkstück 3 befindet. Das Werkstück 3 ruht auf einem in Richtung des Doppelpfeils 4 bewegbaren Schließteller 5, welcher vor dem Füllen des Brennraums 2 mit einem Brenngas-Sauerstoffgemisch und Zünden desselben an die Stirnfläche der Bearbeitungskammer 1 angelegt wird. Zwischen Teller 5 und Stirnfläche ist eine Dichtung 6 angeordnet.

Die Gaskomponenten des Brenngas-Sauerstoffgemisches werden über einen Dosierzylinder 7 für Brenngas bzw. einen Dosierzylinder 8 für Sauerstoff mittels je eines Gaseinstoßkolbens 9 bzw. 10 in den als Mischraum dienenden Brennraum 2 eingebracht. Die Kolben 9, 10 sind durch ein Joch 11 miteinander gekoppelt, so daß sie unter dem Einfluß einer am Joch angreifenden Kraft Hübe gleicher Größe ausführen.

Von den Dosierzylindern 7, 8 führt je eine druckfeste Leitung 12 bzw. 13 in einen Ventilblock 14, der aus einem massiven Metallblock besteht. Die Leitungen 12, 13 münden in je eine Anschlußbohrung 15 bzw. 16 im Ventilblock 14, an die sich Bohrungen 17 bzw. 18 anschließen. Die Bohrungen 17, 18 finden ihre Fortsetzung in den Kopfteil der Bearbeitungskammer 1 durchquerenden Bohrungen 19 bzw. 20, welche das Brenngas bzw. den Sauerstoff in den Brennraum 2 der Kammer leiten. Zum Zünden des im Brennraum 2 befindlichen Gasgemisches dient eine Zündkerze 21 (Figur 2), die in einer Hülse 22 sitzt, welche in einer in der Seitenwand der Kammer 1 vorgesehenen Bohrung 23 befestigt ist. Zwischen den Bohrungen 15, 17 und 16, 18 befindet sich je ein Ventil 24, 25 bzw. 26, 27. Diese Ventile werden am Beginn des Gaseinstoßvorgangs geöffnet und nach Abschluß des Gaseinstosses, wenn die Kolben 9, 10 ihre Endstellung erreicht haben und sich kein Gas mehr in den Zylindern 7, 8 befindet, wieder geschlossen.

In einer zentrischen Bohrung 28 des Kopfteils der Bearbeitungskammer 1 ist ein zylindrischer Bolzen 29 aus hitzebeständigem Material befestigt. Der Bolzen 29 besteht aus zwei Teilen 30, 31, die miteinander verschweißt sind und unterschiedliche Durchmesser haben. Das obere Teilstück 30, dessen Durchmesser demjenigen der Bohrung 28 entspricht, hat eine Ringnut 32, in welche die Sauerstoff führende Bohrung 19 mündet. Außerdem ist dieses Teilstück mit einer zentrischen Vertikalbohrung 33 und einer von dieser abgehenden Querbohrung 34 versehen, die den Anschluß an die Brenngas führende Bohrung 20 herstellt.

Das untere Teilstück 31 des Bolzens 29 hat einen etwas kleineren Durchmesser als die Bohrung 28. Dadurch entsteht ein Ringspalt 35, durch den der über die Bohrung 19 und die Ringnut 32 zugeführte Sauerstoff als die eine Gaskomponente in den als Mischraum dienenden Brennraum 2 eintritt. Es bildet sich dabei eine das Teilstück 31 des Bolzens umgebende Mantelströmung aus. Das Teilstück 31 hat eine mit der Vertikalbohrung 33 des Teilstücks 30 fluchtende Sacklochbohrung 36. Von dieser Bohrung gehen mehrere Radialbohrung 37 ab, welche im Bereich der Umfangsfläche des Teilstücks 31 in den Brennraum 2 münden. Das dem Brennraum 2 zugekehrte Ende des Teilstücks 31 hat einen Überstand a gegenüber der die Bohrung 28 für den Bolzen 29 aufweisenden Wandfläche 38 des Brennraums 2, in dessen Bereich die Bohrungen 37 austreten. Die Bohrungen sind im Ausführungsbeispiel leicht nach unten geneigt. Sie bilden zusammen eine Mehrlochdüse, welche das Brenngas strahlenförmig in den aus dem Ringspalt 35 austretenden Sauerstoff-Mantelstrom injiziert. Dadurch wird eine innige, gleichmäßige Vermischung der beiden Gaskomponenten erzielt und ein gut zündfähiges Gemisch hergestellt.

Bei dem in Figur 4 in einem Querschnitt dargestellten Teilstück 31 des Bolzens 29 sind die Radialbohrungen 37 durch Stopfen 39 verschlossen. Von den Radialbohrungen 37 gehen Bohrungen 40 ab, die tangential in den Brenn- und Mischraum 2 einmünden. Die Einmündung in den Raum 2 erfolgt dabei in gleichem Drehsinn. Infolge der tangentialen Zuleitung der durch die Bohrungen 40 austretenden Gasstrahlen entsteht eine starke Drallströmung. Es kommt zu einer Überlagerung einer Rotationsströmung mit einer Axialströmung, wobei die Axialströmung der mantelförmige Gasstrom ist, der durch den Ringspalt 35 gebildet wird. Dies zusammen ergibt eine intensive Vermischung von Brenngas und Sauerstoff und somit ein sehr zündfreudiges Gemisch.

Anstatt in einer Werkstück-Bearbeitungskammer könnte die Düsenanordnung auch in einem separaten, an die Kammer angeflanschten Mischblock angebracht sein, welcher eine Zündvorrichtung sowie einen Mischraum hat, an den sich eine in den Brennraum der Werkstück-Bearbeitungskammer mündende Gaszuleitung anschließt. Die Bauart des Ausführungsbeispiels erbringt demgegenüber den Vorteil, daß der Brennraum der Werkstück-Bearbeitungskammer zugleich als Mischkammer für die Gaskomponenten dient und ein separater Block lediglich noch die Ventile zu enthalten braucht, welche während des Entgratprozesses die Gaszuleitungen verschließen und den Brennraum von der Gasversorgung trennen. Die dem Brennraum 2 zugekehrte Stirnfläche des Bolzens 29 wirkt als Prallfläche, die den Ventilblock 14 gegen die bei der Explosion des Gasgemisches auftretende Druck-und Hitzewelle schützt und dadurch dessen Standzeit erhöht.

Durch die Verwendung eines als Verschleißteil konzipierten Rundbolzens läßt sich auf überraschend einfache Weise eine Düsenanordnung realisieren, welche den Gasströmen vor ihrem Eintritt in den Mischraum eine deren Vermischung fördernde Form und Richtung aufzwingt. Die Mantelfläche des Bolzens bildet zusammen mit der Wand der den Bolzen aufnehmenden Bohrung eine Ringspaltdüse für die eine Gaskomponente, während die im Bolzen angebrachten Radialbohrungen eine Mehrlochdüse bilden, welche die austretenden Gasstrahlen in den durch den Ringspalt 35 erzeugten mantelförmigen Gasstrom injiziert.

Die Anlage, wie sie in Figur 1 dargestellt ist, eignet sich nicht nur zum thermischen Entgraten von Werkstücken, sondern ist ebenso für weitere Anwendungsgebiete geeignet. So kann mit einer derartigen Anlage das Verfahren des Retikulierens von Schaumstoff nach DE-Patent 15 04 096 oder das Verfahren zum Entfernen von porösen Formen z. B. nach DE-Patent 23 22 760 durchgeführt werden. Es gibt noch zahlreiche weitere Anwendungsgebiete, bei welchen Werkstücke durch ein explosives Gasgemisch bearbeitet werden. Der Schutz der erfindungsgemäßen Vorrichtung erstreckt sich selbstverständlich auch auf diese weiteren Anwendungsgebiete.

## Patentansprüche

1. Bearbeitungskammer, insbesondere für thermische Entgratanlagen, mit einem druckdicht verschließbaren Brennraum zum Behandeln von Materialien mittels Temperatur- und Druckstößen durch Zünden eines in den Brennraum eingelassenen, aus mindestens zwei Komponenten bestehenden, brennbaren Gasgemisches, wobei Zuleitungen für die Gaskomponenten in den Brennraum münden, dadurch gekennzeichnet, daß die Zuleitungen in ihrem Mündungsbereich mit einer Düsenanordnung (35, 37, 40) versehen sind, welche aus einer eine Gaskomponente führenden Ringspaltdüse (35) und einer auf den aus der Ring spaltdüse austretenden Gasstrom gerichteten Mehrlochdüse (37, 40) für eine zweite Gaskomponente besteht, und daß der Ringspalt der Ringspaltdüse durch eine in einer Wand des Brennraums (2) angebrachten Bohrung (28) und einem in diese zentrisch eingesetzten Rundbolzen (29) aus hitzebeständigem Material gebildet wird.

2. Bearbeitungskammer nach Anspruch 1, dadurch gekennzeichnet, daß der Ringspalt (35) über eine im Rund bolzen (29) ausgebildete Ringnut (32) an die Gaszuleitung (19) angeschlossen ist.

3. Bearbeitungskammer nach Anspruch 1, dadurch gekennzeichnet, daß das dem Mischraum (2) zugekehrte Ende (31) des Rundbolzens (29) einen Überstand (a) gegenüber der die Bohrung (28) für den Bolzen aufweisenden Wandfläche (38) des Brennraums hat, und daß im Bereich dieses Überstandes die Mehrlochdüse (37, 40) im bzw. am Rundbolzen angebracht ist.

4. Bearbeitungskammer nach Anspruch 3, dadurch gekennzeichnet, daß der Rund bolzen (29) eine an die Gaszuleitung (20) angeschlossene Zentralbohrung (33, 36) hat, von welcher die die Mehrlochdüse bildenden Radialbohrungen (37) abgehen, die im Bereich des Überstandes (a) in den Brennraum (2) münden.

5. Bearbeitungskammer nach Anspruch 4, dadurch gekennzeichnet, daß die von der Zentralbohrung (33, 36) abgehenden Radialbohrungen (37) der Mehrlochdüse bezüglich der Längsachse des Rundbolzens (29) zum Brennraum (2) hin geneigt verlaufen.

6. Bearbeitungskammer nach Anspruch 4 oder 5, dadurch gekennzeichnet, daß die von der Zentralbohrung (33, 36) abgehenden Radialbohrungen (37) durch Stopfen (39) verschlossen sind, und daß von den Radialbohrungen Bohrungen (40) abgehen, die tangential in den Brennraum (2) einmünden.

## Claims

1. Treatment chamber, especially for thermal deburring installations, with a combustion space closeable in a pressure-tight manner for the treatment of materials by means of heat shocks and pressure shocks as a result of the ignition of a combustible gas mixture introduced into the combustion space and consisting of at least two components, feed lines for the gas components opening into the combustion space, characterized in that the feed lines are equipped in their mouth region with a nozzle arrangement (35, 37, 40) which consists of an annular-gap nozzle (35) conveying a gas component and of a multi-hole nozzle (37, 40) directed towards the gas stream issuing from the annular-gap nozzle and intended for a second gas component, and in that the annular gap of the annular gap nozzle is formed by a bore (28) made in a wall of the combustion space (2) and by a round bolt (29) inserted centrally into the said bore (28) and made of heat-resistant material.

2. Treatment chamber according to Claim 1, characterized in that the annular gap (35) is connected to the gas feed line (19) via an annular groove (32) made in the round bolt (29).

3. Treatment chamber according to Claim 1, characterized in that the end (31) of the round bolt (29) facing the mixing space (2) has a portion (a) projecting relative to the wall surface (38), having the bore (38) for the bolt, of the combustion space and in that the multi-hole nozzle (37, 40) is attached in or on the round bolt in the region of this projecting portion.

4. Treatment chamber according to Claim 3, characterized in that the round bolt (29) has a central bore (33, 36) which is connected to the gas feed line (20) and from which extend the radial bores (37) forming the multi-hole nozzle and opening into the combustion space (2) in the region of the projecting portion (a).

5. Treatment chamber according to Claim 4, characterized in that the radial bores (37) of the multi-hole nozzle which extend from the central bore (33, 36) are inclined towards the combustion space (2) in relation to the longitudinal axis of the round bolt (29).

6. Treatment chamber according to Claim 4 or 5, characterized in that the radial bores (37) extending from the central bore (33, 36) are closed by means of plugs (39), and in that bores (40) extend from the radial bores and open tangentially into the combustion space (2).

**Revendications**

1. Chambre de traitement, notamment pour installations d'ébavurage thermique, comportant une chambre de combustion pouvant se fermer de façon étanche à la pression, pour le traitement de matériaux au moyen de chocs de température et de pression par inflammation d'un mélange de gaz inflammable, composé d'au moins deux constituants, que l'on introduit dans cette chambre de combustion, des conduites d'amenée pour les constituants du gaz débouchant dans la chambre de combustion, chambre de traitement caractérisée en ce que les conduites d'amenée sont munies, dans la zone où elles débouchent, d'un dispositif de buses (35, 37, 40) qui est constitué par une buse à fente annulaire (35) par laquelle passe un constituant du gaz, et par une buse à plusieurs trous (37, 40) prévue pour un second constituant du gaz et dirigée sur le courant de gaz sortant de la buse à fente annulaire, et en ce que le passage annulaire correspondant à la buse à fente annulaire est formé par un alésage (28) ménagé dans une paroi de la chambre de combustion (2) et une pièce cylindrique (29), en matériau résistant à la chaleur, insérée en position centrale dans cet alésage.

2. Chambre de traitement selon la revendication 1, caractérisée en ce que la fente annulaire (35) est raccordée à la conduite d'amenée (19) de gaz par l'intermédiaire d'une gorge annulaire (32) constituée dans la pièce ou broche cylindrique insérée (29).

3. Chambre de traitement selon la revendication 1, caractérisée en ce que l'extrémité (31) de la pièce ou broche cylindrique (29) située en regard de la chambre de mélange (2) comporte une partie en saillie (a) par rapport à la surface de paroi (38) de la chambre de combustion qui présente l'alésage prévu pour cette pièce cylindrique et en ce que la buse à plusieurs trous (37, 40) est disposée, dans ou sur la pièce cylindrique, dans la zone de cette partie en saillie.

4. Chambre de traitement selon la revendication 3, caractérisée en ce que la pièce ou broche cylindrique insérée (29) comporte un alésage central (33, 36) raccordé à la conduite d'amenée (20) de gaz, et duquel partent les alésages radiaux (37) formant la buse à plusieurs trous, et qui débouchent, dans la chambre de combustion (2), dans la zone de la partie en saillie (a).

5. Chambre de traitement selon la revendication 4, caractérisée en ce que les alésages radiaux (37) partant de l'alésage central (33, 36) de la buse à plusieurs trous s'étendent en étant inclinée vers la chambre de combustion (2) par rapport à l'axe longitudinal de la pièce ou broche cylindrique (29).

6. Chambre de traitement selon la revendication 4 ou 5, caractérisée en ce que les alésages radiaux (37) partant de l'alésage central (33, 36) sont fermés par des bouchons (39), et en ce que de ces alésages radiaux partent des alésages (40) qui débouchent tangentiellement dans la chambre de combustion (2).

FIG.1

0 214 165

FIG.2

FIG.3

FIG.4